Europäisches Patentamt

European Patent Office

Office européen des brevets

(11) Publication number: **0 367 557 B1**

# EUROPEAN PATENT SPECIFICATION

(45) Date of publication of patent specification: **05.01.94** (51) Int. Cl.5: **B60C 11/00**

(21) Application number: **89311223.5**

(22) Date of filing: **31.10.89**

(54) **Vehicle tyre.**

(30) Priority: **04.11.88 JP 277501/88**

(43) Date of publication of application:
**09.05.90 Bulletin 90/19**

(45) Publication of the grant of the patent:
**05.01.94 Bulletin 94/01**

(84) Designated Contracting States:
**DE FR GB**

(56) References cited:
**EP-A- 0 069 464**
**EP-A- 0 246 997**
**US-A- 3 004 578**

**PATENT ABSTRACTS OF JAPAN, vol. 13, no. 143 (M-811)[3491], 7th April 1989;& JP-A-63 306 903 (BRIDGESTONE CORP.) 14-12-1988**

(73) Proprietor: **SUMITOMO RUBBER INDUSTRIES LIMITED**
**1-1 Tsutsuicho 1-chome**
**Chuo-ku**
**Kobe-shi Hyogo-ken(JP)**

(72) Inventor: **Sawano, Shigehiro**
**1-9-20-510 Uozaki Nakamachi**
**Higashinada-ku**
**Kobe-shi Hyogo-ken(JP)**

(74) Representative: **Stewart, Charles Geoffrey**
**SP TYRES UK LIMITED**
**Tyre Technical Division**
**Fort Dunlop, Erdington, Birmingham B24 9OT**
**(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a vehicle tyre and, more particularly, to a tyre tread pattern in which a plurality of basic patterns each including at least a groove extending in the direction intersecting the circumferential direction of the tyre are disposed in the circumferential direction of the tyre.

In previous tyres, for instance, the one shown in EP-A-0 246 997 and which corresponds to the preamble of claim 1, it is known to use a tread pattern in which a plurality of basic patterns different from each other in lengthwise dimension, that is pitch in the circumferential direction of the tyre (hereinafter referred to as tyre circumferential direction) are sequentially disposed in the tyre circumferential direction so as to vary the frequency of noise generated on a vehicle and to thus disperse the noise energy.

Another known tyre has a tread pattern in which a plurality of basic patterns different from each other in pitch are disposed at random in the circumferential direction so as to vary the frequency of the noise.

In each of these types of tyres the portions between adjacent grooves in the tyre circumferential direction are blocks defining the ground contact surface of a tread. The lengthwise dimension of a block in the tyre circumferential direction (hereinafter referred to as circumferential lengthwise dimension) varies depending upon the pitch of the basic pattern including the block.

However, since each of these types of conventional tyres has the blocks different from each other in respect of their circumferential lengthwise dimension, the rigidity of the block in the tyre circumferential direction (hereinafter referred to as circumferential rigidity) varies depending upon the pitch of the basic pattern. A tyre having such an uneven circumferential rigidity generates vibrations when the automobile, on which the tyre is mounted, is running.

The object of the present invention is to provide a tyre for the use on an automobile having blocks with approximately uniform circumferential rigidity.

According to the present invention, a vehicle has a tread pattern including a plurality of basic patterns different from each other in pitch and disposed in the tyre circumferential direction, each of the basic patterns including at least a groove extending in the direction intersecting the tyre circumferential direction and the groove having a depthwise dimension substantially proportional to the pitch of the corresponding basic pattern.

Further features of the invention will become apparent from the following description of preferred embodiments of the invention by way of example only with reference to the accompanying drawings, in which:

Figure 1 is an explanatory illustration of the circumferential rigidity of a block;

Figure 2 is a development view showing an embodiment of a tread pattern of a tyre according to the present invention;

Figure 3 is an enlarged-scale sectional view taken along a tyre circumferential line of a portion of the tyre having the tread pattern shown in Figure 2 so as to represent the size of the groove and the pitch of each basic pattern without hatching;

Figure 4 shows another embodiment of the tyre similar to that in Figure 3; and

Figures 5(A), (B) and (C) are respectively enlarged-scale sectional views showing other embodiments of the configuration of the groove.

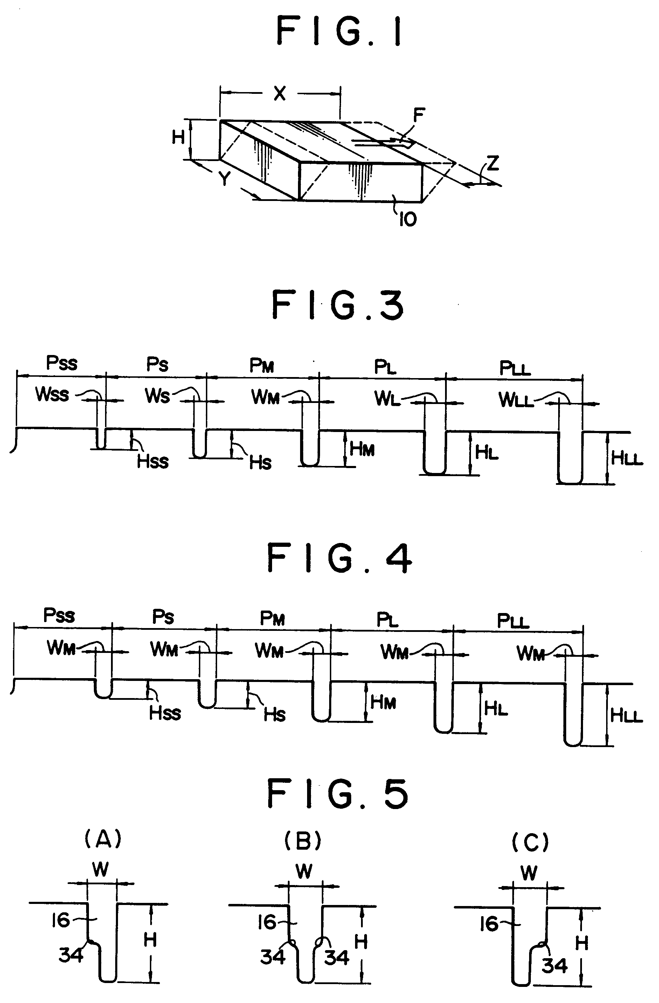

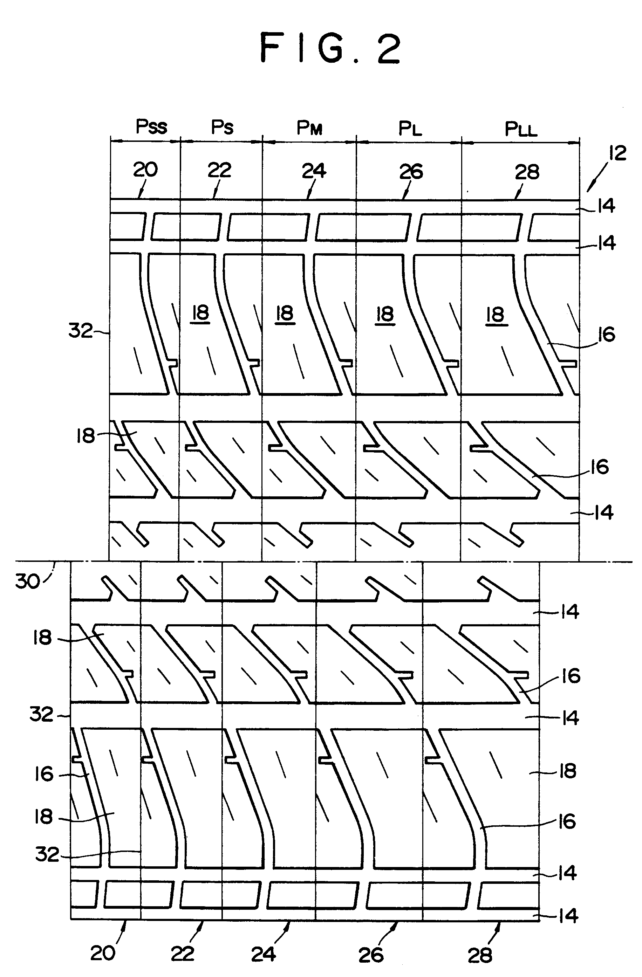

Considering the pattern in general as shown in Figure 1, assuming that the circumferential rigidity of a block 10 is Kp, the tyre circumferential force acting on the block 10 is F, the circumferential lengthwise dimension of the block 10 is X, the tyre widthwise dimension of the block 10 is Y, the height dimension, i.e. depthwise dimension of the groove of the block 10 is H, the amount of deformation of the block 10 due to a force F in the tyre circumferential direction is Z, the shearing rigidity of the block 10 is G, the area (X x Y) of the block 10 is A and the bending rigidity of the block 10 is D, then the circumferential rigidity Kp of the block 10 is represented by the following formula:

$$Kp = F/Z$$
$$= 1/[(H^3/3D) + (H/AG)]$$

As apparent from the above formula, the circumferential rigidity Kp of the block 10 relative to the force F is proportional to the circumferential lengthwise dimension X of the block 10, whereas it is in inverse proportion to the height dimension H of the block 10.

In the tyre according to the present invention, it is arranged so that if the circumferential lengthwise dimension X of the block included in the basic pattern having the large pitch is large, then the height dimension H of the block, i.e. the depthwise dimension of the groove included in the same basic pattern is large. Also, when the lengthwise dimension X of the block included in the basic pattern having a small pitch is small, the height dimension H of the block, i.e. the depthwise dimension of the groove included in the same basic pattern is small. Thus, the circumferential rigidity of the tyre according to the present invention is made uniform in comparison with those of the conventional tyres.

The depthwise dimension and the widthwise dimension of the groove are preferably defined as values substantially proportional to the pitch. Thus, since the maximum value of the deformation amount Z of the block is regulated by the widthwise dimension of the groove, the maximum value of the amount of deformation Z of the block included in the basic pattern having a small pitch is small, whereas the maximum value of the amount of deformation Z of the block included in the basic pattern having a large pitch is large. Accordingly, the circumferential rigidity of the tyre is made further uniform.

Referring now to Figure 2, which shows a detailed embodiment a tyre 12 has a plurality of annular grooves 14 extending in the tyre circumferential direction, a plurality of grooves 16 extending so as to cross the grooves 14 and a plurality of blocks 18 formed by and separated from each other by the grooves 14, 16. The grooves 14, 16 and the blocks 18 provide a major part of the tread pattern.

The tread pattern of the tyre 12 has five types of basic patterns 20, 22, 24, 26 and 28 each different from each other in pitch and disposed at random in the tyre circumferential direction and in two rows so as to sandwich the central rib region of the tread, i.e. tread centre 30 therebetween. The basic patterns disposed on one side of the tread centre 30 on the other side of the tread centre 30 are formed in inverse relation to each other.

The basic patterns 20, 22, 24, 26 and 28 have respectively pitches PSS, PS, PM, PL, and PLL, whichg are related to one another as follows:

$$PSS < PS < PM < PL < PLL$$

As shown the boundary between the adjacent basic patterns is located in a position indicated by a line 32, while each line 32 may be located in a position which is displaced to the right or left of Figure 2 by a value within the dimensional range corresponding to a half of the minimum pitch PSS.

As shown in Figure 3, the grooves included in the basic patterns 20, 22, 24, 26 and 28 have respectively the depthwise dimensions HSS, HS, HM, HL and HLL, and the widthwise dimensions WSS, WS, WM, WL and WLL proportional to the pitches of the corresponding basic patterns 20, 22, 24, 26 and 28.

Further, as shown in Figure 4, the respective widthwise dimensions of the grooves 16 may be made constant, and the respective depthwise dimensions of the grooves 16 may be set to values proportional to the pitches of the corresponding basic patterns.

The depthwise dimension H and the widthwise dimension W of each groove 16 are obtained from the following formulae with reference to the pitch PO, the depthwise dimension HO and the widthwise dimension WO of one basic pattern.

$$H = HO \times (P/PO)$$
$$W = WO \times (P/PO)$$

where P indicates the pitch of the corresponding basic pattern.

The variation or error in the depthwise dimension H and that in the widthwise dimension W of the groove 16 for the pitch of the corresponding basic pattern are preferably within the range of + or - 5%. If the error in the depthwise dimension and that in the widthwise dimension of the groove 16 for the pitch of the basic pattern exceed the range of + or - 5 %, the unevenness of the circumferential rigidity of the block is abruptly enlarged.

The depthwise dimension H and the widthwise dimension W of the groove 16, in which the errors of the pitch of the corresponding pattern are within the range of + or - 5%, are represented by the following formulae:

$$0.95 \times HO \times (P/PO) \leqq H \leqq 1.05 \times HO \times (P/PO)$$

and

$$0.95 \times WO \times (P/PO) \leqq W \leqq 1.05 \times WO \times (P/PO)$$

Accordingly, the depthwise dimension and the widthwise dimension of each groove 16 with reference to the pitch PM, the depthwise dimension HM and the widthwise dimension WM of the basic pattern 24, for example, are obtained as values which satisfy the following formulae:

$$0.95 \times HM \times (PSS/PM) \leqq HSS \leqq 1.05 \times HM \times (PSS/PM)$$
$$0.95 \times HM \times (PS/PM) \leqq HS \leqq 1.05 \times HM \times (PS/PM)$$
$$0.95 \times HM \times (PL/PM) \leqq HL \leqq 1.05 \times HM \times (PL/PM)$$
$$0.95 \times HM \times (PLL/PM) \leqq HLL \leqq 1.05 \times HM \times (PLL/PM)$$
$$0.95 \times WM \times (PSS/PM) \leqq WSS \leqq 1.05 \times WM \times (PSS/PM)$$
$$0.95 \times WM \times (PS/PM) \leqq WS \leqq 1.05 \times WM \times (PS/PM)$$
$$0.95 \times WM \times (PL/PM) \leqq WL \leqq 1.05 \times WM \times (PL/PM)$$ and
$$0.95 \times WM \times (PLL/PM) \leqq WLL \leqq 1.05 \times WM \times (PLL/PM)$$

Each groove 16 may take various desired forms in section, such as V-shaped section, U-shaped section or channel-shaped section. As shown in Figures 5(A), (B) and (C), the grooves may have a stage or step 34 provided on the way of the depthwise direction.

## Claims

1. A vehicle tyre comprising a tread pattern including a plurality of basic patterns (20,22,24,26,28) different from each other in pitch (PSS,PS,PM,PL,PLL) and disposed in the tyre circumferential direction, each of said basic patterns (20,22,24,26,28) including at least one groove (16) extending in the direction intersecting said tyre circumferential direction, characterised in that each of said grooves (16) has a depthwise dimension (HSS,HS,HM,HL,HLL) substantially proportional to the pitch (PSS,PS,PM,PL,PLL) of said corresponding basic pattern (20,22,24,26,28) and that the depthwise dimension H and the widthwise dimension W of each groove (16) are obtained from the following formulae with reference to the pitch PO, the depthwise dimension HO and the widthwise dimension WO of one basic pattern,

$$H = HO \times (P/PO)$$
$$W = WO \times (P/PO)$$

where P indicates the pitch of the corresponding basic pattern.

2. A tyre according to claim 1 characterised in that the variation or error in the depthwise dimensions (HSS,HS,HM,HL,HLL) of said grooves (16) is in the range of + or - 5%.

3. A tyre according to claim 1 or 2 characterised in that each of said grooves (16) has substantially the same widthwise dimension (W).

4. A tyre according to claim 1 or 2 characterised in that each of said grooves (16) has a widthwise dimension (WSS,WS,WM,WL,WLL) substantially proportional to said pitch (PSS,PS,PM,PL,PLL).

5. A tyre according to claim 3 or 4 characterized in that the variation or error in the widthwise dimension (W,WSS,WS,WM,WL,WLL) of said groove (16) is defined within the range of + or - 5%.

6. A tyre according to any of claims 1 to 5 characterized in that each groove (16) has a stage (34) provided part way down the groove in the depthwise direction.

## Patentansprüche

1. Ein Fahrzeugreifen mit einem Laufflächenprofil, welches eine Vielzahl von Basisprofilen (20, 22, 24, 26, 28) einschließt, die sich voneinander in einer Teilung (PSS, PS, PM, PL, PLL) unterscheiden und in der Reifenumfangsrichtung angeordnet sind, wobei jedes der Basisprofile (20, 22, 24, 26, 28) wenigstens eine Nut (16) einschließt, die sich in die die Reifenumfangsrichtung schneidende Richtung erstreckt, dadurch **gekennzeichnet,** daß jede der Nuten (16) eine Tiefenausdehnung (HSS, HS, HM, HL, HLL) aufweist, die im wesentlichen proportional zur Teilung (PSS, PS, PM, PL, PLL) des entsprechenden Basisprofils (20, 22, 24, 26, 28) ist, und daß die Tiefenausdehnung H und die Breitenausdehnung W jeder Nut (16) sich aus den folgenden Formeln bezüglich der Teilung PO, der Tiefenausdehnung HO und der Breitenausdehnung WO eines Basisprofils ergeben,

$$H = HO \times (P/PO)$$
$$W = WO \times (P/PO),$$

wobei P die Teilung des entsprechenden Basisprofils bezeichnet.

2. Ein Reifen nach Anspruch 1, dadurch **gekennzeichnet,** daß die Schwankung oder der Fehler in den Tiefenausdehnungen (HSS, HS, HM, HL, HLL) der Nuten (16) im Bereich von + oder - 5% liegt.

3. Ein Reifen nach Anspruch 1 oder 2, dadurch **gekennzeichnet,** daß jede der Nuten (16) im wesentlichen die gleiche Breitenausdehnung (W) aufweist.

4. Ein Reifen nach Anspruch 1 oder 2, dadurch **gekennzeichnet,** daß jede der Nuten (16) eine Breitenausdehnung (WSS, WS, WM, WL, WLL) aufweist, die im wesentlichen proportional zur Teilung (PSS, PS, PM, PL, PLL) ist.

5. Ein Reifen nach Anspruch 3 oder 4, dadurch **gekennzeichnet,** daß die Schwankung oder der Fehler in der Breitenausdehnung (W, WSS, WS, WM, WL, WLL) der Nut (16) innerhalb des Bereichs von + oder - 5% begrenzt ist.

6. Ein Reifen nach einem der Ansprüche 1 bis 5, dadurch **gekennzeichnet,** daß jede Nut 16 eine Stufung (34) aufweist, die im Verlauf nutabwärts in die Tiefenrichtung vorgesehen ist.

## Revendications

1. Pneumatique pour véhicule, comprenant une sculpture de bande de roulement ayant plusieurs sculptures fondamentales (20, 22, 24, 26, 28) différant les unes des autres par leur pas (PSS, PS, PM, PL, PLL) et disposées dans la direction circonférentielle du pneumatique, chacune des sculptures fondamentales (20, 22, 24, 26, 28) comprenant au moins une gorge (16) placée dans une direction qui recoupe la direction circonférentielle du pneumatique, caractérisé en ce que chacune des gorges (16) a une dimension suivant la profondeur (HSS, HS, HM, HL, HLL) qui est pratiquement proportionnelle au pas (PSS, PS, PM, PL, PLL) de la sculpture fondamentale correspondante (20, 22, 24, 26, 28), et la dimension en profondeur H et la dimension suivant la largeur W de chaque gorge (16) sont obtenues d'après les formules suivantes, en référence au pas PO, à la dimension en profondeur HO et à la dimension en largeur WO d'une sculpture fondamentale

$$H = HO \times (P/PO)$$
$$W = WO \times (P/PO)$$

P désignant le pas de la sculpture fondamentale correspondante.

2. Pneumatique selon la revendication 1, caractérisé en ce que la variation ou erreur des dimensions en profondeur (HSS, HS, HM, HL, HLL) des gorges (16) est comprise dans la plage de ± 5 %.

3. Pneumatique selon la revendication 1 ou 2, caractérisé en ce que chacune des gorges (16) a pratiquement la même dimension suivant la largeur (W).

4. Pneumatique selon la revendication 1 ou 2, caractérisé en ce que chacune des gorges (16) a une dimension suivant la largeur (WSS, WS, WM, WL, WLL) qui est pratiquement proportionnelle au pas (PSS, PS, PM, PL, PLL).

5. Pneumatique selon la revendication 3 ou 4, caractérisé en ce que la variation ou erreur dans la direction de la largeur (W, WSS, WS, WM, WL, WLL) de la gorge (16) est définie dans la plage de ± 5 %.

6. Pneumatique selon l'une quelconque des revendications 1 à 5, caractérisé en ce que chaque gorge (16) a un gradin (34) le long de la gorge dans la direction de la profondeur.

# FIG. 1

# FIG. 3

# FIG. 4

# FIG. 5

(A)  (B)  (C)

# FIG. 2